# EUROPÄISCHE PATENTSCHRIFT

(11) **EP 0 519 376 B1**
(45) Veröffentlichungstag und Bekanntmachung des Hinweises auf die Patenterteilung: **11.09.1996**
(21) Anmeldenummer: 92110060.8
(22) Anmeldetag: 15.06.1992
(51) Int. Cl.: C08G 8/28, C08K 5/00, C08K 5/06, C08K 5/09, C08K 5/10

(54) **Bindemittelharze zur Herstellung von Faserverbunden**
Binder resins for making fibre composites
Liants résineux pour la fabrication de composites fibrés

(30) Priorität: 21.06.1991 DE 4120582
(43) Veröffentlichungstag der Anmeldung: 23.12.1992
(73) Patentinhaber: HOECHST AKTIENGESELLSCHAFT, 65926 Frankfurt am Main (DE)
(72) Erfinder: Hesse, Wolfgang, Dr., W-6204 Taunusstein (DE); Leicht, Erhard, Dr., W-6238 Hofheim (DE); Sattelmeyer, Richard, Dr., W-6200 Wiesbaden (DE); Schäfer, Ralph, W-6200 Wiesbaden (DE)

(56) Entgegenhaltungen:
- EP-A- 0 363 539
- EP-A- 0 376 432
- EP-A- 0 388 145
- GB-B- 559 684
- Derwent Publications Ltd., London, GB; AN 82-62388E

## Beschreibung

Die Erfindung betrifft Bindemittelharze mit verbessertem Fließverhalten bei der Herstellung von härtbaren Faserverbunden aus natürlichen oder synthetischen Fasermaterialien auf der Basis von Vernetzungsmittel und ggf. weitere übliche Hilfsmittel und Füllstoffe enthaltenden und thermisch härtbaren Novolaken, die keine freien, einkernigen Phenole enthalten, mit Zusatzkomponenten in den Novolaken von Verbindungen aus der Gruppe Polyglykole, Polycarbonsäuren bzw. deren Anhydride, saure Ester aus Polyglykolen und Polycarbonsäuren, ein Verfahren zu ihrer Herstellung, ihre Verwendung zur Herstellung von gehärteten Faserverbundformteilen und die so erhabtenen Formteile.

Die Verwendung von härtbaren Phenolharzen des Novolaktyps als Bindemittel zusammen mit Härtungsmitteln zur Herstellung von Faserverbunden aus faserigen Materialien, vorzugsweise Textilfasern, und daraus gefertigten Isolier- oder Polstermatten sowie von Formteilen verschiedenster Art, deren Dichte der vorgesehenen Verwendung weitgehend angepaßt werden kann, ist bekannt und wird ausgeübt. Als Fasermaterial werden z. B. Faservliese oder Fasergelege aus Natur- oder Synthesefasern, Stapelfasern, Non-wovens, Reißfasern vorzugsweise textilen Ursprungs, vorzugsweise organische oder gegebenenfalls anorganische Natur- oder Synthesefasern, eingesetzt. Dabei werden härtbare, phenolhaltige Novolake mit den Härtungsmitteln, die Methylolgruppen enthaltende oder Methylengruppen abgebende Verbindungen, vorzugsweise Hexamethylentetramin oder Melaminharze, darstellen, in Form von feinen Pulvern mit den Fasermaterialien innig vermischt und dann durch Wärmeeinwirkung bei Temperaturen oberhalb von 120 °C unter Formgebung gehärtet. Die Bindemittel können außer der Harzkomponente und dem Härtungsmittel noch weitere Bestandteile, wie z. B. Pigmente, übliche Verarbeitungshilfsmittel, anorganische Füllstoffe, Wachse, Metallsalze, wie z. B. Aluminiumstearat, enthalten. Zur Bindung von Staubteilchen können die Bindemittelpulver mit geringen Mengen an Mineralölen besprüht werden.

Bei der Herstellung von Faserverbunden aus Faservliesen wird die Harzkomponente mit Härterzusatz in der erforderlichen Menge mit den zu bindenden Fasermaterialien, die vorzugsweise in Form von flächigen endlosen Bahnen mit gleichmäßiger Schichtstärke vorliegen, vermischt oder auf diese aufgebracht. Durch anschließende Wärmeeinwirkung wird das bindemittelhaltige Fasermaterial auf eine Temperatur von ca. 100 °C gebracht, wodurch eine teilweise Härtung des Harzsystems erfolgen und unter Anwendung von geringem Egalisierungspressdruck, der auf die gewünschte Dichte des Faservlieses abgestimmt wird, eine Bindung des Fasermaterials zu Vorfabrikaten, vorzugsweise zu tafelförmigen Vorfabrikaten mit Schichtdicken von 0,5 bis 10 cm, erzielt werden kann. Die Vorfabrikate können anschließend in Endprodukte überführt werden, indem man sie unter Formgebung und gegebenenfalls erforderlichem höherem Pressdruck auf Temperaturen von über 120 °C, vorzugsweise bis zu 200 °C, erhitzt, wobei eine weitere Härtung bis zu dem gewünschten Vernetzungszustand erfolgt. Auf diese Weise können aus Vorfabrikaten bedarfsweise z. B. gehärtete Automobilbauteile wie Türverkleidungen, Hutablagen oder sonstige geformte Gegenstände hergestellt werden. Die dabei erhaltenen Fertigprodukte können zur Erzielung eines ansprechenden optischen Erscheinungsbildes noch einer Oberflächenbehandlung, wie z. B. Lackierung, Kaschierung o. ä. unterzogen werden.

Die als Bindemittel verwendeten Phenolharze vom Novolaktyp können durch Kondensation von einkernigen oder mehrkernigen Phenolen, vorzugsweise Phenol, Resorcin oder Phenol und/oder Bisphenole, mit einem molaren Unterschuß von Formaldehyd hergestellt und am Ende des Produktionsprozesses durch Destillation weitgehend von ungebundenen und destillierbaren einkernigen Phenolen befreit werden. Wenn nun der Novolak als Bindemittelharz für Faserverbunde Verwendung finden soll, so ist eine vollständige Entfernung des ungebundenen freien Phenols nicht erwünscht, da sich nach Entfernung des Phenols die Verarbeitungseigenschaften des Harzes verschlechtern und die Gelierzeit sowie der Fließweg nicht mehr den Anforderungen entsprechen. Um als Faservliesbindemittel verwendet werden zu können, muß der Novolak noch merkliche Anteile an freiem Phenol enthalten, was sich jedoch bei der Verarbeitung des Harzes und auch in den gehärteten Endprodukten sowohl geruchlich als auch toxikologisch belastend und nachteilig auswirkt. So entweicht freies Phenol insbesondere bei Einwirkung von höheren Temperaturen auf das Fertigteil, insbesondere bei gegebenenfalls zusätzlicher Feuchtigkeitseinwirkung, und führt zu unerwünschten Emissionen. Auch wenn derartige Ausgasungen noch deutlich unterhalb von toxikologisch zulässigen Grenzen, z. B. dem MAK-Wert, liegen und somit aus arbeitsmedizinischer Sicht keine akute Gefährdung darstellen, so ist zumindest die Geruchsbelästigung sehr störend und die gänzliche Beseitigung bzw. Verminderung des freien Phenols ein dringliches Problem. Von besonderer Bedeutung ist dieses Problem bei Endprodukten für die tägliche Benutzung, wie z. B. den in Fahrzeugen angebrachten Formteilen, Dämmaterialien oder Verkleidungselementen. Der Einsatz von phenolfreien Novolakharzen auf der Basis von Polyphenolen als Bindemittelharze könnte hier z. B. die Forderung nach Emissionsfreiheit erfüllen. Diese Harze haben aber wegen unzureichender Fließfähigkeit, unzureichender mechanischer Festigkeit, mangelhaftem Faserbindungsvermögen und unzureichender Vernetzungsaktivität bei der Herstellung von Faserverbunden bisher keinen Eingang finden können.

Der Erfindung lag somit die Aufgabe zugrunde, emissionsfreie Bindemittelharze auf Phenolharzbasis verfügbar zu machen, welche die aufgezeigten Nachteile nicht besitzen und allen an Bindemittelharze für Faserverbunde zu stellenden technischen, anwendungstechnischen und toxikologischen Anforderungen genügen.

Es wurde nun überraschenderweise gefunden, daß man übliche Novolakharze, die weitgehend frei sind von einkernigen Phenolen, vorzugsweise frei von Phenol, als Bindemittel für Faserverbunde vorteilhaft einsetzen kann, wenn man dem phenolfreien Novolak Verbindungen aus der Gruppe Polyglykole, Polycarbonsäuren bzw. deren Anhydride, saure Ester aus den genannten Polyglykolen und Polycarbonsäuren als Zusatzkomponenten, vorzugsweise in der Schmelze, beimischt.

Gegenstand der Erfindung sind daher Bindemittelharze mit verbessertem Fließverhalten bei der Faserverbundherstellung auf der Basis von Vernetzungsmittel enthaltenden und thermisch härtbaren Novolaken, die keine bzw. keine wesentlichen Mengen an freien, einkernigen Phenolen enthalten, dadurch gekennzeichnet, daß die Novolake als Zusatzkomponenten Polyglykole und/oder Polycarbonsäuren und/oder Polycarbonsäureanhydride und/oder saure Ester aus Polyglykolen und Polycarbonsäuren enthalten.

Der Mengenanteil dieser Zusatzkomponenten beträgt insgesamt vorzugsweise 0,5 bis 20 Gew.-%, insbesondere vorzugsweise 0,8 bis 10 Gew.-%, besonders bevorzugt 1 bis 8 Gew.-%, bezogen auf den phenolfreien Novolak.

In den erfindungsgemäß zu verwendenden, weitgehend phenolfreien Novolaken liegt der Gehalt an freiem Phenol < 1 Gew.-%, vorzugsweise < 0,3 Gew.-%, insbesondere < 0,05 Gew.-%, bezogen auf den Novolak. Die Novolake können Kondensationsprodukte aus Formaldehyd und einkernigen und/oder mehrkernigen Phenolen enthalten. Unter den einkernigen Phenolen ist dabei Phenol bevorzugt, und unter den mehrkernigen Phenolen die Bisphenole, vorzugsweise aus der Gruppe Diphenylolmethan und 4,4'-Diphenylolpropan. Bevorzugt sind solche phenolfreien Novolakharze, deren Herstellung in Abwesenheit von einkernigen Ausgangsphenolen erfolgte, wie z. B. Phenol/Formaldehyd-Kondensationsprodukte auf Basis von Bisphenolen, z. B. Diphenylolmethan oder p,p'-Diphenylolpropan.

Bevorzugt sind ferner solche phenolfreien Novolake, in denen das molare Verhältnis der phenolischen Komponente zu Formaldehyd in dem Kondensationsprodukt 1:0,4 bis 1:0,9 beträgt. Bevorzugt sind auch phenolfreie Novolake, deren Schmelzpunkt nach DIN 53736 im Bereich von 35 °C bis 120 °C liegt.

Bevorzugt sind außerdem phenolfreie Novolake, deren 50 gew.-%ige Lösungen in 1-Methoxypropanol-2 bei 23 °C eine Viskosität im Bereich von 100 bis 3000 mPa·s, gemessen nach DIN 53177, aufweisen.

Als Polyglykole kommen vorzugsweise thermostabile aliphatische oligomere oder polymere Äther von Diolen, insbesondere von Alkylenglykolen bzw. von Alkandiolen mit mindestens 3 Alkylenoxydgrundeinheiten im Polyglykoläthermolekül und endständigen Hydroxylgruppen infrage, insbesondere solche Polyglykole, die bei Temperaturen oberhalb von 5 °C flüssig sind. Bevorzugt sind z. B. oligomere oder polymere Äther von Ethylenglykol, Propylenglykol, Butylenglykol oder Mischäther aus diesen Glykolen. Besonders bevorzugt sind Triethylenglykol, Tetraethylenglykol, Pentaethylenglykol oder Gemische aus diesen Polyglykolen.

Als Polycarbonsäuren kommen vorzugsweise thermostabile Polycarbonsäuren, die mindestens 2 Carboxylgruppen im Molekül enthalten, insbesondere z. B. aus der Gruppe Phthalsäure, Maleinsäure, Fumarsäure, Adipinsäure, Bernsteinsäure, Trimellithsäure oder Anhydride aus den genannten Säuren oder saure Ester aus den genannten Polycarbonsäuren mit den genannten Polyglykolen, vorzugsweise Maleinsäurehalbester, zur Anwendung.

Die phenolarmen bzw. phenolfreien Novolake werden nach üblichen Verfahren, z.B. aus einkernigen Phenolen, vorzugsweise aus Phenol oder bzw. und aus niedermolekularen Bis- oder Polyphenolen durch Kondensation mit einem molaren Unterschuß an Formaldehyd hergestellt und am Schluß des Herstellungsverfahrens von gegebenenfalls noch vorhandenen einkernigen Phenolen, insbesondere Phenol, durch Destillation befreit. Dem so erhaltenen phenolarmen bzw. phenolfreien Novolak werden in der Schmelze die erfindungsgemäßen Zusatzkomponenten Polyglykol und/oder Polycarbonsäure und/oder Polycarbonsäureanhydrid und/oder saurer Ester aus Polyglykol und Polycarbonsäure in den gewünschten Mengen zugesetzt und homogen verteilt, vorzugsweise in der Novolakschmelze gelöst, und nach Abkühlung des Gemisches auf Raumtemperatur dieses zu einem feinen Pulver vermahlen.

Als Härtungsmittel werden dem mit den erfindungsgemäßen Zusatzkomponenten vermischten Novolak bei Raumtemperatur übliche methylolgruppenhaltige oder Methylgruppen abspaltende Verbindungen, wie z.B. Hexamethylentetramin (abgekürzt: Hexa) oder ein Melaminharz oder ein Furanharz, vorzugsweise Hexa, vorzugsweise in Pulverform beigemischt und gleichmäßig in üblicher Weise heterogen oder homogen verteilt. Die für die thermische Härtung erforderliche optimale Menge an Härtungsmittel muß in Vorversuchen ermittelt werden und liegt im allgemeinen im Bereich von 2 bis 20 Gew.-%, vorzugsweise 5 bis 15 Gew.-%, bezogen auf das Gemisch aus Novolak und Zusatzkomponente.

Die erfindungsgemäßen Bindemittelharze können zur Anpassung an praktische Erfordernisse durch Zusätze von weiteren üblichen Substanzen in üblichen Mengen, vorzugsweise Hilfsmitteln und Füllstoffen, modifiziert werden, wodurch sich verschiedene Eigenschaften der Harze bei der Verarbeitung und im Endprodukt vorteilhaft beeinflussen lassen. So können z.B. zur Verbesserung der Entformbarkeit der Endprodukte aus dem Presswerkzeug vorteilhaft Paraffinwachse, Esterwachse, wie z.B. Karnaubawachs, Montanwachse, Polyethylenwachse, Metallsalze höherer Fettsäuren, wie z.B. Calcium- oder Aluminiumstearat, mitverwendet werden. Durch Zusätze von pulverförmigen anorganischen Substanzen, wie z.B. Kaolin oder Gesteinsmehle, können u.a. die Rieselfähigkeit des Bindemittelharzpulvers verbessert oder durch Zusatz von Calciumborat die Entflammbarkeit des Harzes vermindert und dessen Thermostabilität verbessert werden. Auch Pigmentfarben können vorteilhaft mitverwendet werden. Durch Aufsprühen geringer Mengen viskoser Mineralöle oder natürlicher oder synthetischer Öle auf die Harzpulver bei deren Konfektionierung kann die Staubentwicklung und damit u.a. die Explosionsgefahr in geschlossenen Räumen stark vermindert werden. Die Konfektionierung erfindungsgemäßer Bindemittelharze kann vorteilhaft in üblichen Mahl- und Mischaggregaten für die Herstellung pulverförmiger Gemische durchgeführt werden, wobei die einzelnen Bindemittelkomponenten als Pulver mit der erforderlichen Teilchengrößenverteilung in den Mischer dosiert werden.

Gegenstand der Erfindung ist daher ferner ein Verfahren zur Herstellung erfindungsgemäßer Bindemittelharze, indem man phenolfreien bzw. phenolarmen Novolaken in der Schmelze die Zusatzkomponenten zusetzt und gleichmäßig verteilt, vorzugsweise in der Schmelze löst, die resultierende Schmelze auf Raumtemperatur abkühlt, in einer Mahlvorrichtung pulverisiert, so daß mindestens 70 Gew.-% der Harzmasse eine Teilchengröße von < 40 µm besitzt, anschließend das Harzpulver mit dem pulverförmigen Vernetzungsmittel innig vermischt und gegebenenfalls weitere Hilfsmittel und Füllstoffe, vorzugsweise in Pulverform, gleichmäßig in dem Bindemittelharz verteilt und das Bindemittelharz vorzugsweise in feiner Pulverform gewinnt.

Weiterer Gegenstand der Erfindung ist auch die Verwendung erfindungsgemäßer Bindemittelharze zur Herstellung von gehärteten Faserverbundformteilen, indem man das Bindemittelharz in der erforderlichen Menge pulverförmig in natürlichem oder synthetischem Fasermaterial, vorzugsweise Faservliesen oder Fasergelegen in Form von flächigen Bahnen mit gleichmäßiger Schichtstärke, verteilt, das Material unter leichtem Egalisierungspressdruck auf ca. 100 °C erwärmt, wobei eine teilweise Härtung des Harzes unter Verklebung des Fasermaterials zu einem Vorfabrikat, vorzugsweise einem tafelförmigen Vorfabrikat mit Schichtdicken bis zu 10 cm, erfolgt, und man anschließend das Vorfabrikat unter Formgebung und gegebenenfalls erforderlichem höherem Pressdruck auf über 120 °C, vorzugsweise auf 120 bis 200 °C, insbesondere auf 180 °C, erwärmt, wobei eine weitere Härtung des Bindemittelharzes in den gewünschten Endvernetzungszustand erfolgt und man das gehärtete Faserverbundformteil erhält.

Gegenstand der Erfindung ist daher auch ein Verfahren zur Herstellung gehärteter Faserverbundformteile unter Verwendung erfindungsgemäßer Bindemittelharze wie vorstehend beschrieben.

Gegenstand der Erfindung sind ferner gehärtete Faserverbundformteile, hergestellt unter Verwendung erfindungsgemäßer Bindemittelharze.

Die Erfindung wird durch die nachfolgenden Beispiele näher erläutert.

### Beispiel 1

### A) Herstellung eines phenolfreien Novolaks

20 Gew.-Teile wäßriger Formaldehyd (30 gew.-%ig), 74 Gew.-Teile Xylol und 114 Gew.-Teile p,p'-Diphenylolpropan werden in einem mit Rückflußkühler, absteigendem Kühler, Wasserabscheider, Thermometer, Rührer, Heizung und einer Vorrichtung zum Anlegen von Vakuum versehenen Kessel vorgelegt. Die Mischung wird auf 80 °C erwärmt. Unter Rühren werden weitere 114 Gew.-Teile p,p'-Diphenylolpropan, 18,8 Gew.-Teile Paraformaldehyd (96 gew.-%ig) und 0,75 Gew.-Teile Oxalsäure (kristallwasserhaltig) eingetragen. Der Ansatz wird unter Rühren 4 1/2 Stunden am Rückfluß gekocht. Der Gehalt an freiem Formaldehyd sinkt auf 0,83 Gew.-%. Darauf wird das Wasser azeotrop abdestilliert. Dabei fallen 27 Gew.-Teile Wasser mit einem Gehalt von 1,83 Gew.-% Formaldehyd an. Das Xylol wird am absteigenden Kühler zunächst unter Normaldruck, nach Erreichen einer Sumpftemperatur von 180 °C unter Vakuum abdestilliert. Nach Erreichen einer Sumpftemperatur von 200 °C wird diese noch 15 Minuten lang aufrechterhalten; dann wird das Harz abgelassen.

Man erhält 237 Gew.-Teile Novolak mit einem Schmelzpunkt nach DIN 53736 von 108 °C und einer Farbzahl 3 (nach Hellige). Der Gehalt an freiem Phenol in dem Novolak liegt unterhalb von 0,05 Gew.-%, bezogen auf den Novolak. Das Harz ist geruchsfrei und vergilbungsbeständig. Die Viskosität einer 50 gew.-%igen Lösung des Novolaks in 1-Methoxypropanol-2 bei 23 °C, gemessen nach DIN 53177, beträgt 1800 mPa·s.

### B) Herstellung eines erfindungsgemäß modifizierten Novolaks

96 Gew.-Teile eines nach Beispiel 1A hergestellten phenolfreien Novolaks, der einen Schmelzpunkt von 108 °C besitzt, werden aufgeschmolzen und der Schmelze bei 180 °C 4 Gew.-Teile Triethylenglykol zugesetzt und gleichmäßig verteilt, wobei es sich in der Schmelze löst. Das resultierende Harz wird abgelassen und auf Raumtemperatur abgekühlt. Sein Schmelzpunkt, gemessen nach DIN 53736, beträgt 92 °C. Der Gehalt an freiem Phenol in dem modifizierten Novolak liegt unterhalb von 0,05 Gew.-%, bezogen auf den Novolak.

### Vergleichsbeispiel 1

### Herstellung eines phenolhaltigen Novolaks

96 Gew.-Teile eines nach Beispiel 1A hergestellten phenolfreien Novolaks, der einen Schmelzpunkt von 108 °C besitzt, werden aufgeschmolzen und der Schmelze bei 180 °C 4 Gew.-Teile Phenol zugesetzt und gleichmäßig verteilt, wobei es sich in der Schmelze löst. Das resultierende phenolhaltige Harz wird abgelassen und auf Raumtemperatur abgekühlt. Sein Schmelzpunkt, gemessen nach DIN 53736, beträgt 89 °C.

### Beispiel 2 und Vergleichsbeispiele 2 und 3

### Anwendungstechnische Prüfungen

Zu vergleichenden Prüfungen werden die Novolake nach Beispielen 1A und 1B sowie nach Vergleichsbeispiel 1 jeweils in üblicher Weise zu Pulvern gemahlen, so daß mindestens 70 Gew.-% der Harzmasse jeweils eine Teilchengröße von < 40 µm besitzt. Anschließend wird jedem der gemahlenen Harzpulver als Härtungsmittel pulverförmiges Hexa im Gewichtsverhältnis Harz:Hexa = 90:10 zugemischt und gleichmäßig verteilt. Mit den erhaltenen Bindemittelharz/Härter-Gemischen werden folgende anwendungstechnischen Prüfungen durchgeführt:
a) Bestimmung der Schmelzviskosität (in Pa·s) nach DIN 53229 bei 125 °C und bei 150 °C.
b) Bestimmung des Fließwegs in mm bei 125 °C nach DIN 16916.
c) Herstellung eines Faserverbundes mit Baumwollfasern aus jeweils
   80 Gew.-% Baumwollfasern und
   20 Gew.-% Bindemittelharz/Härter-Gemisch.

Dazu wird das pulverförmige Bindemittelharz/Härter-Gemisch jeweils in einem Baumwollfaservlies gleichmäßig verteilt und unter geringem Egalisierungspressdruck bei 100 °C während 5 Minuten in ein partiell ausgehärtetes Faservlies-Vorfabrikat übergeführt. Die solchermaßen hergestellten Vorfabrikate werden sodann zwischen zwei Pressplatten unter einem Druck von 10 bar während 2 Minuten zur vollständigen Aushärtung auf 180 °C erwärmt und die resultierenden Prüfkörper anschließend bei Raumtemperatur nach subjektiv feststellbaren Eigenschaftsmerkmalen wie Formstabilität, Biegungsverhalten, Bruchverhalten, Vernetzungszustand, Harzbenetzungs- bzw. Harzbedeckungsgrad der Baumwollfasern beurteilt. Die Ergebnisse von Beispiel 2 und den Vergleichsbeispielen 2 und 3 sind in der Tabelle 1 zusammengefaßt wiedergegeben.

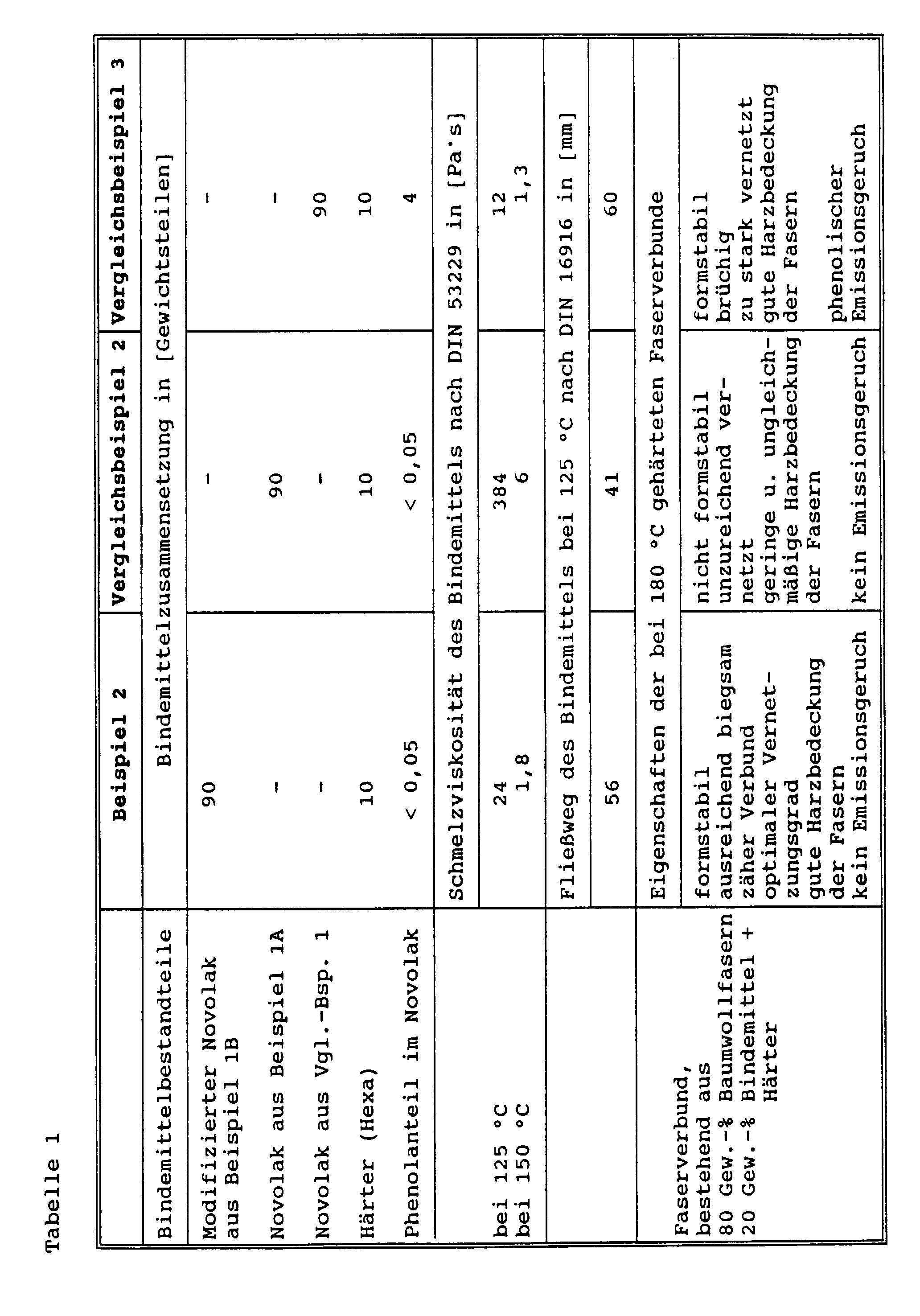

Wie den Ergebnissen in Tabelle 1 entnommen werden kann, besitzt das erfindungsgemäß modifizierte Bindemittel gemäß Beispiel 2 überraschenderweise rundum vorteilhafte Eigenschaften. Es zeigt ein etwa gleich gutes Verhalten wie das phenolhaltige Bindemittel des Vergleichsbeispiels 3, ohne jedoch bei der vergleichsweisen thermischen Aushärtung brüchig zu werden und ohne phenolischen Emissionsgeruch zu verbreiten. Das nichtmodifizierte phenolfreie Bindemittel stellt gemäß Vergleichsbeispiel 2 infolge seiner hohen Schmelzviskosität, seines niedrigen Fließweges, seinem unzureichenden Faserbedeckungsvermögen und der damit einhergehenden unzureichenden Harzbindung an den Faserkreuzpunkten sowie dem unzureichenden Vernetzungsverhalten bei der thermischen Aushärtung kein für die Faserverbundherstellung geeignetes Bindemittel dar.

## Patentansprüche (Patentansprüche für folgende(n) Vertragsstaat(en): AT, BE, CH, DE, DK, FR, GB, IT, LI, LU, MC, NL, PT, SE)

1. Bindemittelharze mit verbessertem Fließverhalten bei der Faserverbundherstellung auf der Basis von Vernetzungsmittel enthaltenden und thermisch härtbaren Novolaken, die weniger als 1 Gew.-% bezogen auf den Novolak freier, einkerniger Phenole enthalten, dadurch gekennzeichnet, daß die Novolake als Zusatzkomponente Polyglykole und/oder Polycarbonsäuren und/oder Polycarbonsäureanhydride und/oder saure Ester aus Polyglykolen und Polycarbonsäuren enthalten.

2. Bindemittelharze nach Anspruch 1, dadurch gekennzeichnet, daß der Mengenanteil der Zusatzkomponente insgesamt 0,5 bis 20 Gew.-%, vorzugsweise 0,8 bis 10 Gew.-%, insbesondere 1 bis 8 Gew.-%, bezogen auf den Novolak, beträgt.

3. Bindemittelharze nach Anspruch 1 oder 2, dadurch gekennzeichnet, daß in dem Novolak das molare Verhältnis der phenolischen Komponenten zu Formaldehyd in dem Kondensationsprodukt 1 : 0,4 bis 1 : 0,9 beträgt.

4. Bindemittelharze nach einem oder mehreren der Ansprüche 1 bis 3, dadurch gekennzeichnet, daß der Novolak Kondensationsprodukte aus Bisphenolen, vorzugsweise Diphenylolmethan oder p,p'-Diphenylolpropan, und Formaldehyd enthält.

5. Bindemittelharze nach einem oder mehreren der Ansprüche 1 bis 4, dadurch gekennzeichnet, daß der in dem Bindemittelharz enthaltene Novolak einen Schmelzpunkt im Bereich von 35 bis 120 °C besitzt und dessen 50 gew.-%ige Lösung in 1-Methoxypropanol-2 bei 23 °C eine Viskosität im Bereich von 100 bis 3000 mPa·s, gemessen nach DIN 53177, aufweist.

6. Bindemittelharze nach einem oder mehreren der Ansprüche 1 bis 5, dadurch gekennzeichnet, daß sie als Zusatzkomponente aliphatische Polyglykole mit mindestens 3 Alkylenoxideinheiten im Molekül, die bei Temperaturen oberhalb von 5 °C flüssig sind, vorzugsweise Triethylenglykol, Tetraethylenglykol, Pentaethylenglykol oder deren Mischungen, enthalten.

7. Bindemittelharze nach einem oder mehreren der Ansprüche 1 bis 6, dadurch gekennzeichnet, daß sie als Zusatzkomponente thermostabile Polycarbonsäuren mit mindestens 2 Carboxylgruppen im Molekül oder deren Anhydride, vorzugsweise aus der Gruppe Phthalsäure, Maleinsäure, Fumarsäure, Adipinsäure, Bernsteinsäure, Trimellithsäure, oder saure Ester der Polycarbonsäuren mit aliphatischen Polyglykolen enthalten.

8. Bindemittelharze nach einem oder mehreren der Ansprüche 1 bis 7, dadurch gekennzeichnet, daß sie als Vernetzungsmittel Hexamethylentetramin oder ein Melaminharz, vorzugsweise in Mengen von 2 bis 20 Gew.-%, insbesondere 5 bis 15 Gew.-%, bezogen auf das Bindemittelharz, in gleichmäßiger Verteilung enthalten.

9. Bindemittelharze nach einem oder mehreren der Ansprüche 1 bis 8, dadurch gekennzeichnet, daß sie übliche Hilfsmittel und übliche Füllstoffe enthalten.

10. Verfahren zur Herstellung von Bindemittelharzen nach einem oder mehreren der Ansprüche 1 bis 9, dadurch gekennzeichnet, daß man dem phenolfreien bzw. phenolarmen Novolak in der Schmelze die Zusatzkomponenten zusetzt und gleichmäßig verteilt, vorzugsweise in der Schmelze löst, die resultierende Schmelze auf Raumtemperatur abkühlt, in einer Mahlvorrichtung pulverisiert, so daß mindestens 70 Gew.-% der Harzmasse eine Teilchengröße von < 40 µm besitzt, anschließend das Harzpulver mit dem pulverförmigen Vernetzungsmittel innig vermischt und gegebenenfalls weitere Hilfsmittel und Füllstoffe, vorzugsweise in Pulverform, gleichmäßig in dem Bindemittelharz verteilt und das Bindemittelharz vorzugsweise in feiner Pulverform gewinnt.

11. Verwendung von Bindemittelharzen nach einem oder mehreren der Ansprüche 1 bis 9 bzw. hergestellt nach Anspruch 10 zur Herstellung von gehärteten Faserverbundformteilen, dadurch gekennzeichnet, daß man das Bindemittelharz in der erforderlichen Menge pulverförmig in natürlichem oder synthetischem Fasermaterial, vorzugsweise Faservliesen oder Fasergelegen in Form von flächigen Bahnen mit gleichmäßiger Schichtstärke, verteilt, das Material unter leichtem Egalisierungspressdruck auf ca. 100 °C erwärmt, wobei eine teilweise Härtung des Harzes unter Verklebung des Fasermaterials zu einem Vorfabrikat, vorzugsweise einem tafelförmigen Vorfabrikat mit Schichtdicken bis zu 10 cm, erfolgt, und man anschließend das Vorfabrikat unter Formgebung und gegebenenfalls erforderlichem höheren Pressdruck auf über 120 °C, vorzugsweise auf 180 °C, erwärmt, wobei eine weitere Härtung des Bindemittelharzes in den gewünschten Endvernetzungszustand erfolgt und man das gehärtete Faserverbundformteil erhält.

12. Gehärtete Faserverbundformteile, hergestellt nach Anspruch 11.

## Patentansprüche (Patentansprüche für folgende(n) Vertragsstaat(en): ES)

1. Verfahren zur Herstellung von Bindemittelharzen, die ein verbessertes Fließverhalten bei der Faserverbundherstellung aufweisen, auf der Basis von Vernetzungsmittel enthaltenden und thermisch härtbaren Novolaken, die weniger als 1 Gew.-% bezogen auf den Novolak freier, einkerniger Phenole enthalten, indem man dem phenolfreien bzw. phenolarmen Novolak in der Schmelze Zusatzkonponente zusetzt und gleichmäßig verteilt, vorzugsweise in der Schmelze löst, die resultierende Schmelze auf Raumtemperatur abkühlt, in einer Mahlvorrichtung pulverisiert, so daß mindestens 70 Gew.-% der Harzmasse eine Teilchengröße von < 40 µm besitzt, anschließend das Harzpulver mit dem pulverförmigen Vernetzungsmittel innig vermischt und gegebenenfalls weitere Hilfsmittel und Füllstoffe, vorzugsweise in Pulverform, gleichmäßig in dem Bindemittelharz verteilt und das Bindemittelharz vorzugsweise in feiner Pulverform gewinnt, dadurch gekennzeichnet, daß als Zusatzkomponente Polyglykole und/oder Polycarbonsäuren und/oder Polycarbonsäureanhydride und/oder saure Ester aus Polyglykolen und Polycarbonsäuren zugesetzt sind.

2. Verfahren nach Anspruch 1, dadurch gekennzeichnet, daß der Mengenanteil der Zusatzkomponente insgesamt 0,5 bis 20 Gew.-%, vorzugsweise 0,8 bis 10 Gew.-%, insbesondere 1 bis 8 Gew.-%, bezogen auf den Novolak, beträgt.

3. Verfahren nach Anspruch 1 oder 2, dadurch gekennzeichnet, daß in dem Novolak das molare Verhältnis der phenolischen Komponenten zu Formaldehyd in dem Kondensationsprodukt 1 : 0,4 bis 1 : 0,9 beträgt.

4. Verfahren nach einem oder mehreren der Ansprüche 1 bis 3, dadurch gekennzeichnet, daß der Novolak Kondensationsprodukte aus Bisphenolen, vorzugsweise Diphenylolmethan oder p,p'-Diphenylolpropan, und Formaldehyd enthält.

5. Verfahren nach einem oder mehreren der Ansprüche 1 bis 4, dadurch gekennzeichnet, daß der in dem Bindemittelharz enthaltene Novolak einen Schmelzpunkt im Bereich von 35 bis 120 °C besitzt und dessen 50 gew.-%ige Lösung in 1-Methoxypropanol-2 bei 23 °C eine Viskosität im Bereich von 100 bis 3000 mPa·s, gemessen nach DIN 53177, aufweist.

6. Verfahren nach einem oder mehreren der Ansprüche 1 bis 5, dadurch gekennzeichnet, daß als Zusatzkomponente aliphatische Polyglykole mit mindestens 3 Alkylenoxideinheiten im Molekül, die bei Temperaturen oberhalb von 5 °C flüssig sind, vorzugsweise Triethylenglykol, Tetraethylenglykol, Pentaethylenglykol oder deren Mischungen, eingesetzt werden.

7. Verfahren nach einem oder mehreren der Ansprüche 1 bis 6, dadurch gekennzeichnet, daß als Zusatzkomponente thermostabile Polycarbonsäuren mit mindestens 2 Carboxylgruppen im Molekül oder deren Anhydride, vorzugsweise aus der Gruppe Phthalsäure, Maleinsäure, Fumarsäure, Adipinsäure, Bernsteinsäure, Trimellithsäure, oder saure Ester der Polycarbonsäuren mit aliphatischen Polyglykolen eingesetzt werden.

8. Verfahren nach einem oder mehreren der Ansprüche 1 bis 7, dadurch gekennzeichnet, daß als Vernetzungsmittel Hexamethylentetramin oder ein Melaminharz, vorzugsweise in Mengen von 2 bis 20 Gew.-%, insbesondere 5 bis 15 Gew.-%, bezogen auf das Bindemittelharz, in gleichmäßiger Verteilung eingesetzt werden.

9. Verfahren nach einem oder mehreren der Ansprüche 1 bis 8, dadurch gekennzeichnet, daß übliche Hilfsmittel und übliche Füllstoffe zugesetzt werden.

10. Verwendung von Bindemittelharzen, hergestellt nach Ansprüchen 1 bis 9, zur Herstellung von gehärteten Faserverbundformteilen, indem man das Bindemittelharz in der erforderlichen Menge pulverförmig in natürlichem oder synthetischem Fasermaterial, vorzugsweise Faservliesen oder Fasergelegen in Form von flächigen Bahnen mit gleichmäßiger Schichtstärke, verteilt, das Material unter leichtem Egalisierungspressdruck auf ca. 100 °C erwärmt, wobei eine teilweise Härtung des Harzes unter Verklebung des Fasermaterials zu einem Vorfabrikat, vorzugsweise einem tafelförmigen Vorfabrikat mit Schichtdicken bis zu 10 cm, erfolgt, und man anschließend das Vorfabrikat unter Formgebung und gegebenenfalls erforderlichem höheren Pressdruck auf über 120 °C, vorzugsweise auf 180 °C, erwärmt, wobei eine weitere Härtung des Bindemittelharzes in den gewünschten Endvernetzungszustand erfolgt und man das gehärtete Faserverbundformteil erhält.

11. Gehärtete Faserverbundformteile, hergestellt nach Anspruch 10.

## Claims (Claims for the following Contracting State(s): AT, BE, CH, DE, DK, FR, GB, IT, LI, NL, PT, SE)

1. Binder resins having improved flow properties in the preparation of fiber composites, which are based on thermosetting novolaks which contain crosslinking agents and less than 1 % by weight, relative to the novolak of free mononuclear phenols, wherein the novolaks contain, as additional components, polyglycols and/or polycarboxylic acids and/or polycarboxylic acid anhydrides and/or acid esters of polyglycols and polycarboxylic acids.

2. Binder resins as claimed in claim 1, wherein the proportion of additional components is in total 0.5 to 20 % by weight, preferably 0.8 to 10 % by weight, in particular 1 to 8 % by weight, based on the novolak.

3. Binder resins as claimed in claim 1 or 2, wherein, in the novolak, the molar ratio of the phenolic components to formaldehyde in the condensation product is 1 : 0.4 to 1 : 0.9.

4. Binder resins as claimed in one or more of claims 1 to 3, wherein the novolak contains condensation products of bisphenols, preferably diphenylolmethane or p,p'-diphenylolpropane, and formaldehyde.

5. Binder resins as claimed in one or more of claims 1 to 4, wherein the novolak contained in the binder resin has a melting point in the range from 35 to 120 °C and a 50 % strength by weight solution thereof in 1-methoxy-2-propanol, has a viscosity at 23 °C in the range from 100 to 3000 mPa·s, measured in accordance with DIN 53177.

6. Binder resins as claimed in one or more of claims 1 to 5, which contain, as additional components, aliphatic polyglycols which have at least 3 alkylene oxide units in the molecule and are liquid at temperatures above 5 °C, preferably triethylene glycol, tetraethylene glycol, pentaethylene glycol or mixtures thereof.

7. Binder resins as claimed in one or more of claims 1 to 6, which contain, as additional components, heatstable polycarboxylic acids having at least 2 carboxyl groups in the molecule, or anhydrides thereof, preferably from the group comprising phtalic acid, maleic acid, fumaric acid, adipic acid, succinic acid or trimellitic acid, or acid esters of the polycarboxylic acids with aliphatic polyglycols

8. Binder resins as claimed in one or more of claims 1 to 7, which contain, as the crosslinking agent, hexamethylenetetramine or a melamine resin, preferably in an amount of 2 to 20 % by weight, in particular 5 to 15 % by weight, based on the binder resin, in uniform distribution.

9. Binder resins as claimed in one or more of claims 1 to 8, which contain customary auxiliaries and customary fillers.

10. A process for the preparation of binder resins as claimed in one or more of claims 1 to 9, which comprises adding the additional components to, and uniformly distributing them in, the phenol-free or low-phenol novolak in the melt, preferably dissolving them in the melt, cooling the resulting melt to room temperature, pulverizing the solid in a grinding device so that at least 70 % by weight of the resin mass has a particle size of < 40 µm, subsequently mixing the resin powder intimately with the pulverulent crosslinking agent and if appropriate distributing other auxiliaries and fillers, preferably in powder form, uniformly in the binder resin, and preferably obtaining the binder resin in a fine powder form.

11. The use of binder resins as claimed in one or more of claims 1 to 9 or prepared as claimed in claim 10 for the production of cured fiber composite moldings which comprises distributing the binder resin in the required amount in powder form in naturally occuring or synthetic fiber material, preferably fiber fleeces or fiberwoven fabrics in the form of sheet-like webs having a uniform layer thickness, heating the material to about 100 °C under a slight leveling compressive pressure, partial curing of the resin taking place and the fiber material being glued to give a prefabricated product, preferably a plate-like prefabricated product having layer thicknesses of up to 10 cm, and subsequently heating the prefabricated product to above 120 °C, preferably to 180 °C, while shaping and under a higher pressure if necessary, further curing of the binder resin into the desired final crosslinking state taking place and the cured fiber composite molding being obtained.

12. Cured fiber composite moldings produced as claimed in claim 11.

## Claims (Claims for the following Contracting State(s): ES)

1. A process for the preparation of binder resins having improved flow properties in the preparation of fiber composites, which resins are based on thermosetting novolaks which contain crosslinking agents and less than 1 % by weight, relative to the novolak of free mononuclear phenols which process comprises adding additional components to, and uniformly distributing them in, the phenol-free or low-phenol novolak in the melt, preferably dissolving them in the melt, cooling the resulting melt to room temperature, pulverizing the solid in a grinding device so that at least 70 % by weight of-the resin mass has a particle size of < 40 µm, subsequently mixing the resin powder intimately with the pulverulent crosslinking agent and if appropriate distributing other auxiliaries and fillers, preferably in powder form, uniformly in the binder resin, and preferably obtaining the binder resin in a fine powder form characterized in that polyglycols and/or polycarboxylic acids and/or polycarboxylic acid anhydrides and/or acid esters of polyglycols and polycarboxylic acids, are added as additional component.

2. The process as claimed in claim 1, wherein the proportion of additional component is in total 0.5 to 20 % by weight, preferably 0.8 to 10 % by weight, in particular 1 to 8 % by weight, based on the novolak.

3. The process as claimed in claim 1 or 2, wherein, in the novolak, the molar ratio of the phenolic components to formaldehyde in the condensation product is 1 0.4 to 1 : 0.9.

4. The process as claimed in one or more of claims 1 to 3, wherein the novolak contains condensation products of bisphenols, preferably diphenylolmethane or p,p'-diphenylolpropane, and formaldehyde.

5. The process as claimed in one or more of claims 1 to 4, wherein the novolak contained in the binder resin has a melting point in the range from 35 to 120 °C and a 50 % strength by weight solution thereof in 1-methoxy-2-propanol, has a viscosity at 23 °C in the range from 100 to 3000 mPa·s, measured in accordance with DIN 53177.

6. The process as claimed in one or more of claims 1 to 5, wherein aliphatic polyglycols which have at least 3 alkylene oxide units in the molecule and are liquid at temperatures above 5 °C, preferably triethylene glycol, tetraethylene glycol, pentaethylene glycol or mixtures thereof, are employed as additional component.

7. Binder resins as claimed in one or more of claims 1 to 6, wherein heatstable polycarboxylic acids having at least 2 carboxyl groups in the molecule, or anhydrides thereof, preferably from the group comprising phtalic acid, maleic acid, fumaric acid, adipic acid, succinic acid or trimellitic acid, or acid esters of the polycarboxylic acids with aliphatic polyglycols, are employed as additional component.

8. The process as claimed in one or more of claims 1 to 7, hexamethylenetetramine or a melamine resin, preferably in an amount of 2 to 20 % by weight, in particular 5 to 15 % by weight, based on the binder resin, in uniform distribution, is employed as crosslinking agent.

9. The process as claimed in one or more of claims 1 to 8, wherein customary auxiliaries and customary fillers are employed.

10. The use of binder resins prepared as claimed in claims 1 to 9 for the production of cured fiber composite moldings which comprises distributing the binder resin in the required amount in powder form in naturally occuring or synthetic fiber material, preferably fiber fleeces or fiberwoven fabrics in the form of sheet-like webs having a uniform layer thickness, heating the material to about 100 °C under a slight leveling pressing pressure, partial curing of the resin taking place and the fiber material being glued to give a prefabricated product, preferably a plate-like prefabricated product having layer thicknesses of up to 10 cm, and subsequently heating the prefabricated product to above 120 °C, preferably to 180 °C, while shaping and under a higher pressing pressure if necessary, further curing of the binder resin into the desired final crosslinking state taking place and the cured fiber composite molding being obtained.

11. Cured fiber composite moldings produced as claimed in claim 10.

## Revendications (Revendications pour l'(les) Etat(s) contractant(s) suivant(s): AT, BE, CH, DE, DK, FR, GB, IT, LI, NL, PT, SE)

1. Résines servant de liants ayant des propriétés de fluidité améliorées pour la fabrication de composites fibreux, à base de novolaques thermodurcissables contenant des agents réticulants, qui contiennent moins de 1 % en masse de phénols monocycliques libres par rapport à la novolaque, caractérisées en ce que les novolaques contiennent comme constituants additionnels des polyglycols et/ou des acides polycarboxyliques et/ou des anhydrides d'acides polycarboxyliques et/ou des esters acides de polyglycols et d'acides polycarboxyliques.

2. Résines servant de liants selon la revendication 1, caractérisées en ce que la proportion des constituants additionnels est en tout de 0,5 à 20 % en masse, de préférence de 0,8 à 10 % en masse, en particulier de 1 à 8 % en masse, par rapport à la novolaque.

3. Résines servant de liants selon la revendication 1 ou 2, caractérisées en ce que, dans la novolaque, le rapport molaire des constituants phénoliques au formaldéhyde dans le produit de condensation est de 1:0,4 à 1:0,9.

4. Résines servant de liants selon l'unc ou plusieurs des revendications 1 à 3, caractérisées en ce que la novolaque contient des produits de condensation de bisphénols, de préférence de diphénolméthane ou de p,p'-diphénolpropane, et de formaldéhyde.

5. Résines servant de liants selon l'une ou plusieurs des revendications 1 à 4, caractérisées en ce que la novolaque contenue dans la résine servant de liant a un point de fusion compris entre 35 et 120°C et en ce que sa solution à 50 % en masse dans du 1-méthoxy-2-propanol à 23°C a une viscosité, mesurée selon la norme DIN 53177, comprise entre 100 et 3000 mPa.s.

6. Résines servant de liants selon l'une ou plusieurs des revendications 1 à 5, caractérisées en ce qu'elles contiennent comme constituants additionnels des polyglycols aliphatiques qui ont au moins 3 unités d'oxyde d'alkylène dans la molécule et qui sont liquides à des températures supérieures à 5°C, de préférence du triéthylèneglycol, du tétraéthylèneglycol, du pentaéthylèneglycol ou leurs mélanges.

7. Résines servant de liants selon l'une ou plusieurs des revendications 1 à 6, caractérisées en ce qu'elles contiennent comme constituants additionnels des acides polycarboxyliques thermostables ayant au moins 2 groupes carboxyle dans la molécule ou leurs anhydrides, de préférence du groupe constitué par l'acide phtalique, l'acide maléique, l'acide fumarique, l'acide adipique, l'acide succinique, l'acide trimellitique, ou des esters acides des acides polycarboxyliques avec des polyglycols aliphatiques.

8. Résines servant de liants selon l'une ou plusieurs des revendications 1 à 7, caractérisées en ce qu'elles contiennent comme agent réticulant de l'hexaméthylènetétramine ou une résine mélamine, de préférence en des quantités de 2 à 20 % en masse, en particulier de 5 à 15 % en masse, par rapport à la résine servant de liant, en une dispersion uniforme.

9. Résines servant de liants selon l'une ou plusieurs des revendications 1 à 8, caractérisées en ce qu'elles contiennent des additifs courants et des charges courantes.

10. Procédé de préparation de résines servant de liants selon l'une ou plusieurs des revendications 1 à 9, caractérisé en ce que l'on ajoute les constituants additionnels à la novolaque sans phénol ou pauvre en phénol à l'état fondu, et on les disperse de façon uniforme, de préférence on les dissout dans la masse fondue, on refroidit la masse fondue obtenue à la température ambiante, on la pulvérise dans un appareil de broyage de manière qu'au moins 70 % en masse de la composition de résine ait une taille de particules inférieure à 40 µm, puis on mélange intimement la poudre de résine avec l'agent réticulant pulvérulent et, éventuellement, on disperse uniformément d'autres additifs et des charges, de préférence sous forme pulvérulente, dans la résine servant de liant, et on obtient la résine servant de liant de préférence sous forme d'une poudre fine.

11. Utilisation de résines servant de liants selon l'une ou plusieurs des revendications 1 à 9 ou préparées selon la revendication 10 pour la fabrication de pièces moulées en composite fibreux durcies, caractérisée en ce que l'on disperse la résine servant de liant sous forme de poudre en la quantité nécessaire dans une matière fibreuse naturelle ou synthétique, de préférence dans des voiles de fibres ou des nappes de fibres sous forme de bandes en nappe ayant une épaisseur de couche constante, on chauffe la matière à environ 100°C en exerçant une légère pression de compression égalisatrice, ce qui entraîne un durcissement partiel de la résine avec un collage de la matière fibreuse donnant un préimprégné, de préférence un préimprégné sous forme de plaques ayant une épaisseur allant jusqu'à 10 cm, et on chauffe ensuite le préimprégné à une température supérieure à 120°C, de préférence à 180°C, en le façonnant et en exerçant si nécessaire une pression de compression plus élevée, ce qui entraîne un nouveau durcissement de la résine servant de liant à l'état de réticulation finale désiré, et on obtient la pièce moulée en composite fibreux durcie.

12. Pièces moulées en composite fibreux durcies, fabriquées selon la revendication 11.

## Revendications (Revendications pour l'(les) Etat(s) contractant(s) suivant(s): ES)

1. Procédé de préparation de résines servant de liants ayant des propriétés de fluidité améliorées pour la fabrication de composites fibreux durcissables, à base de novolaques thermodurcissables contenant des agents réticulants, qui contiennent moins de 1 % en masse de phénols monocycliques libres par rapport à la novolaque, selon lequel on ajoute des constituants additionnels à la novolaque sans phénol ou pauvre en phénol à l'état fondu, et on les disperse de façon uniforme, de préférence on les dissout dans la masse fondue, on refroidit la masse fondue obtenue à la température ambiante, on la pulvérise dans un appareil de broyage de manière qu'au moins 70 % en masse de la composition de résine ait une taille de particules inférieure à 40 µm, puis on mélange intimement la poudre de résine avec l'agent réticulant pulvérulent et, éventuellement, on disperse uniformément d'autres additifs et des charges, de préférence sous forme pulvérulente, dans la résine servant de liant, et on obtient la résine servant de liant de préférence sous forme d'une poudre fine, caractérisé en ce que l'on ajoute comme constituants additionnels des polyglycols et/ou des acides polycarboxyliques et/ou des anhydrides d'acides polycarboxyliques et/ou des esters acides de polyglycols et d'acides polycarboxyliques.

2. Procédé selon la revendication 1, caractérisé en ce que la proportion des constituants additionnels est en tout de 0,5 à 20 % en masse, de préférence de 0,8 à 10 % en masse, en particulier de 1 à 8 % en masse, par rapport à la novolaque.

3. Procédé selon la revendication 1 ou 2, caractérisé en ce que, dans la novolaque, le rapport molaire des constituants phénoliques au formaldéhyde dans le produit de condensation est de 1:0,4 à 1:0,9.

4. Procédé selon l'une ou plusieurs des revendications 1 à 3, caractérisé en ce que la novolaque contient des produits de condensation de bisphénols, de préférence de diphénolméthane ou de p,p'-diphénolpropane, et de formaldéhyde.

5. Procédé selon l'une ou plusieurs des revendications 1 à 4, caractérisé en ce que la novolaque contenue dans la résine servant de liant a un point de fusion compris entre 35 et 120°C et en ce que sa solution à 50 % en masse dans du 1-méthoxy-2-propanol à 23°C a une viscosité, mesurée selon la norme DIN 53177, comprise entre 100 et 3000 mPa.s.

6. Procédé selon l'une ou plusieurs des revendications 1 à 5, caractérisé en ce que l'on utilise comme constituants additionnels des polyglycols aliphatiques qui ont au moins 3 unités d'oxyde d'alkylène dans la molécule et qui sont liquides à des températures supérieures à 5°C, de préférence du triéthylèneglycol, du tétraéthylèneglycol, du pentaéthylèneglycol ou leurs mélanges.

7. Procédé selon l'une ou plusieurs des revendications 1 à 6, caractérisé en ce que l'on utilise comme constituants additionnels des acides polycarboxyliques thermostables ayant au moins 2 groupes carboxyle dans la molécule ou leurs anhydrides, de préférence du groupe constitué par l'acide phtalique, l'acide maléique, l'acide fumarique, l'acide adipique, l'acide succinique, l'acide trimellitique, ou des esters acides des acides polycarboxyliques avec des polyglycols aliphatiques.

8. Procédé selon l'une ou plusieurs des revendications 1 à 7, caractérisé en ce que l'on utilise comme agent réticulant de l'hexaméthylènetétmmine ou une résine mélamine, de préférence en des quantités de 2 à 20 % en masse, en particulier de 5 à 15 % en masse, par rapport à la résine servant de liant, en une dispersion uniforme.

9. Procédé selon l'une ou plusieurs des revendications 1 à 8, caractérisé en ce que l'on ajoute des additifs courants et des charges courantes.

10. Utilisation de résines servant de liants préparées selon les revendications 1 à 9 pour la fabrication de pièces moulées en composite fibreux durcies, selon laquelle on disperse la résine servant de liant sous forme de poudre en la quantité nécessaire dans une matière fibreuse naturelle ou synthétique, de préférence dans des voiles de fibres ou des nappes de fibres sous forme de bandes en nappe ayant une épaisseur de couche constante, on chauffe la matière à environ 100°C en exerçant une légère pression de compression égalisatrice, ce qui entraîne un durcissement partiel de la résine avec un collage de la matière fibreuse donnant un préimprégné, de préférence un préimprégné sous forme de plaques ayant une épaisseur allant jusqu'à 10 cm, et on chauffe ensuite le préimprégné à une température supérieure à 120°C, de préférence à 180°C, en le façonnant et en exerçant si nécessaire une pression de compression plus élevée, ce qui entraîne un nouveau durcissement de la résine servant de liant à l'état de réticulation finale désiré, et on obtient la pièce moulée en composite fibreux durcie.

11. Pièces moulées en composite fibreux durcies, fabriquées selon la revendication 10.
